# FASCICULE DE BREVET EUROPEEN

(11) **EP 1 156 418 B1**
(45) Date de publication et mention de la délivrance du brevet: **20.02.2019**
(21) Numéro de dépôt: 01401251.2
(22) Date de dépôt: 15.05.2001
(51) Int. Cl.: G06F 11/36, G06F 15/177, G06F 9/4401

(54) **Interface applicative multiprocesseur, ne nécessitant pas l'utilisation d'un système d'exploitation multiprocesseur**
Applikative Multiprozessorschnittstelle, die kein Multiprozessorbetriebssystem braucht
Applicative multiprocessor interface, not needing the use of a multiprocessor operating system

(30) Priorité: 17.05.2000 FR 0006286
(43) Date de publication de la demande: 21.11.2001
(73) Titulaire: Bull SAS, 78340 Les Clayes-sous-Bois (FR)
(72) Inventeur: Brassac, Claude, 78100 Saint-Germain en Laye (FR); Vigor, Alain, 78100 Saint-Germain en Laye (FR)
(74) Mandataire: Cabinet Camus Lebkiri

(56) Documents cités:
- EP-A- 0 335 812
- US-A- 5 687 073
- US-A- 5 867 703
- CORSINI P ET AL: "MULTIBUG: INTERACTIVE DEBUGGING IN DISTRIBUTED SYSTEMS" IEEE MICRO,US,IEEE INC. NEW YORK, vol. 6, no. 3, 1 juin 1986 (1986-06-01), pages 26-33, XP000719945 ISSN: 0272-1732

## Description

Le domaine d'application de l'invention est celui des tests de machines multiprocesseurs. Les tests sont utiles pour la mise au point d'une machine en phase de conception, pour la vérification de conformité en phase de production, pour la maintenance en phase d'exploitation.

Le test de machines multiprocesseurs est plus difficile que le test de machines monoprocesseurs. En effet, dans une machine monoprocesseur, un unique processeur exécute à un instant donné une seule instruction du système d'exploitation ou de tâches applicatives même si, grâce au temps partagé, ces tâches semblent s'exécuter simultanément.

L'état de la technique est le suivant: la demande de brevet européen EP0335812 décrit un dispositif initialisant un second processeur sous la commande d'un premier processeur à l'aide d'une mémoire partagée, le brevet américain US5867703, décrit un dispositif initialisant séquentiellement plusieurs processeurs secondaires en utilisant un vecteur de redirection et le brevet américain US5687073, décrit un dispositif initialisant plusieurs processeurs secondaires partageant des données d'initialisation.

Dans une machine multiprocesseur, plusieurs processeurs peuvent exécuter simultanément différentes instructions modifiant l'état de la machine. Un système d'exploitation multiprocesseur comprend généralement des fonctions de répartitions (dispatching en anglais) de processus aux processeurs. Il est alors difficile d'effectuer des tests reproductibles car le système d'exploitation ne répartit pas nécessairement deux fois de suite les processus aux processeurs de façon identique. Il est difficile aussi de contrôler sur quel processeur est exécutée une instruction à un instant donné. Ceci présente des inconvénients pour vérifier un comportement des processeurs dans un environnement multiprocesseur de la machine, par exemple vis à vis d'antémémoires de différents niveaux.

Pour pallier les inconvénients précédemment cités, un premier objet de l'invention est un procédé pour exécuter des séquences d'instructions simultanément sur plusieurs processeurs d'une machine multiprocesseur, caractérisé en ce qu'il comprend :
- une première étape dans laquelle un système d'exploitation monoprocesseur est lancé sur un premier processeur ;
- une deuxième étape dans laquelle le premier processeur commande à au moins un autre processeur de la machine d'exécuter une ou plusieurs séquences d'instructions sous contrôle du dit premier processeur.

Ainsi, ce procédé permet d'exécuter plusieurs séquences de code de test simultanément sur plusieurs processeurs, en contrôlant sur quel processeur s'exécute une séquence de code de test donnée. Ce procédé constitue un moyen simple pour piloter des tests dans un contexte multiprocesseur. En effet, le système d'exploitation monoprocesseur n'a alors aucune action sur le fonctionnement des processeurs distincts du premier processeur.

Un deuxième objet de l'invention est un moniteur de test pour mettre en oeuvre un procédé conforme à l'invention.

D'autres détails et avantages de l'invention ressortent de la description qui suit en référence aux figures où :
- la figure 1 présente une machine multiprocesseur ;
- la figure 2 présente les étapes principales du procédé ;
- la figure 3 présente les phases essentielles d'une étape ;
- la figure 4 présente les éléments d'un moniteur de test.

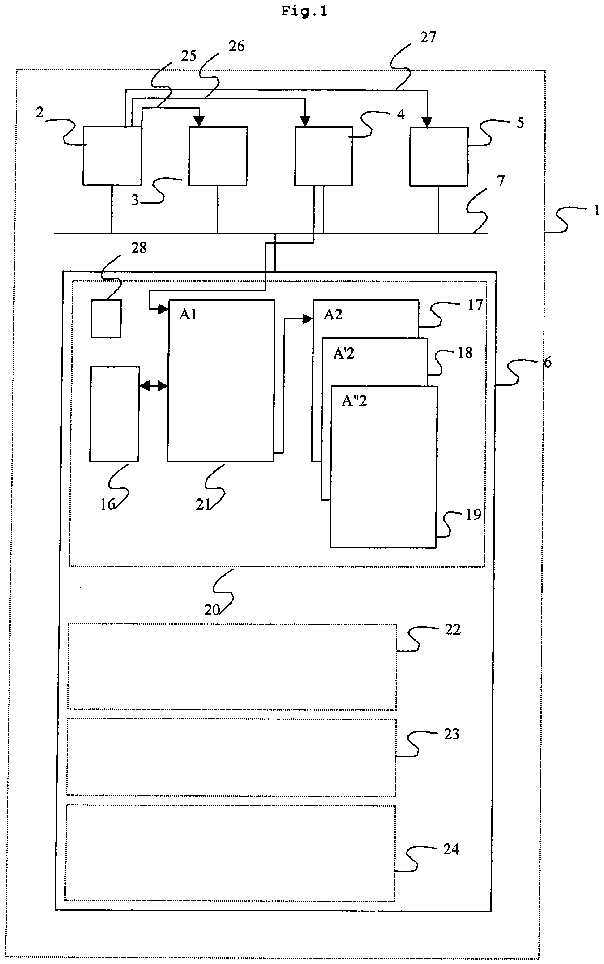

En référence à la figure 1, une machine 1 comprend plusieurs processeurs 2, 3, 4, 5 qui accèdent à une mémoire 6 au moyen d'un bus 7.

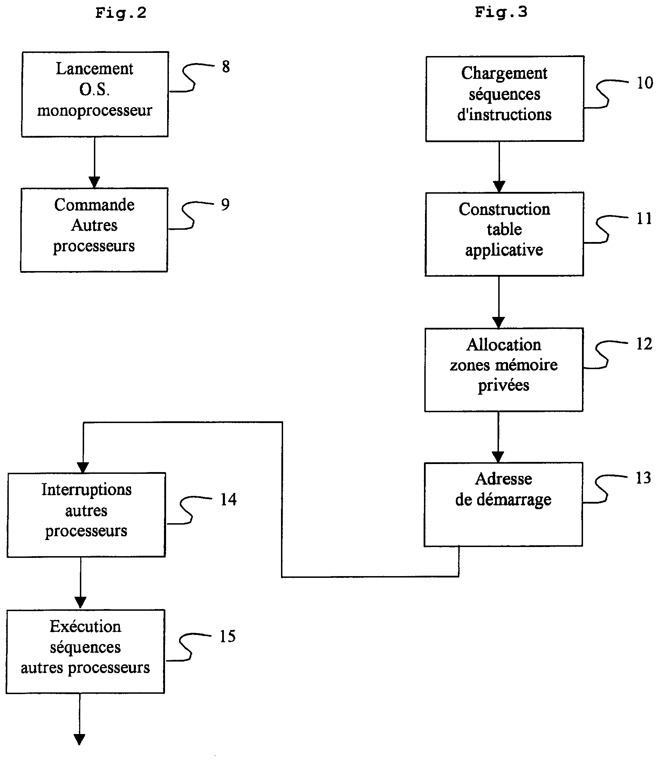

En référence à la figure 2, un système d'exploitation (operating system O.S. en anglais) simplifié monoprocesseur est lancé sur le processeur 2 dans une étape 8. Le processeur 2, encore appelé BSP (BootStrap Processor en anglais pour processeur de lancement), se distingue des autres processeurs 3, 4, 5, encore appelés AP (Application Processor en anglais pour processeur applicatif) en ce que le système d'exploitation monoprocesseur simplifié ne voit que le processeur 2. Le système d'exploitation monoprocesseur est lancé au moyen de fonctions micrologicielles de la machine (firmware en anglais), encore connues sous le nom de BIOS (Basic Input Output System en anglais pour Système d'Entrées Sorties de Base) qui constitue un programme de liaison entre le système d'exploitation et le matériel. Ces fonctions micrologicielles sont généralement stockées dans des mémoires permanentes qui les apparentent aux fonctions matérielles réalisées au moyen de microcircuits. Le système d'exploitation monoprocesseur permet au processeur 2 d'activer une étape 9 dans laquelle le processeur 2 exécute une application de test en commandant aux autres processeurs 3, 4, 5 d'exécuter des séquences d'instructions.

L'étape 2 comprend plusieurs phases expliquées en référence à la figure 3.

Dans une phase 10, le processeur 2 charge en zone mémoire 20, une séquence d'instructions 21 à une adresse A1 et une ou plusieurs séquences d'instructions 17, 18, 19 à une adresse A2, A'2, A"2. Les séquences d'instructions 17, 18, 19, 20 sont disponibles dans des fichiers disques non représentés, dans lesquels elles ont été préalablement écrites au moyen par exemple d'un ordinateur indépendant. De façon avantageuse, la séquence d'instruction 21 est écrite en assembleur car elle utilise directement des instructions processeurs qui servent à initialiser les registres processeur pour mettre un processeur en état d'exécuter une séquence programmée. Les séquences d'instructions 17, 18, 19, constituent ici des séquences de code de test. De façon avantageuse, les séquences de code de test sont obtenues par programmation en langage évolué tel que par exemple le langage C. Le processeur 2 charge également en zone mémoire 20, une structure de verrous sur certaines ressources de la machine 1.

Dans une phase 11, le processeur 2 fait appel à des fonctions micrologicielles du BIOS pour répertorier chacun des autres processeurs 3, 4, 5 de la machine 1. Ces fonctions utilisent généralement des tables micrologicielles de configuration de la machine. Le processeur 2 construit alors en zone mémoire 20, une table applicative 16 à plusieurs lignes dont chaque ligne est accessible au moyen d'un identificateur de processeur de la machine. Pour chaque ligne de la table 16, le processeur associe une zone mémoire 22, 23, 24, propre à respectivement chaque processeur 3, 4, 5. Le processeur 2 range alors dans chaque ligne de la table 16, des données nécessaires à établir un contexte d'exécution pour chaque processeur 3, 4, 5 dont l'identificateur référence cette ligne. Parmi ces données figure par exemple une adresse A2, A'2, A"2 de la séquence 17, 18, 19 à exécuter par le processeur 3, 4, 5 dont l'identificateur référence cette ligne. Une ligne de la table 16 peut contenir une adresse différente de celle contenue dans une autre ligne si les processeurs associés sont appelés à exécuter des séquences d'instructions différentes ou des adresses identiques si les processeurs associés sont appelés à exécuter les mêmes séquences d'instructions.

Dans une phase 12, le processeur 2 alloue une zone mémoire privée 22, 23, 24 à chaque processeur 3, 4, 5 en rangeant à la ligne de la table 16 correspondante une adresse de début et une taille de zone mémoire privée.

Dans une phase 13, le processeur 2 fait appel à une fonction micrologicielle du BIOS pour ranger l'adresse A1 de début de la séquence d'instructions 21, dans une table micrologicielle de démarrage 28. La table 28 est prévue pour donner l'adresse sur laquelle démarre un processeur lorsqu'il reçoit une interruption.

Dans une phase 14, le processeur 2 envoie une interruption 25, 26, 27, respectivement au ou aux processeurs 3, 4, 5, prévus d'être testés.

Dans une phase 15, lorsque le processeur 4 reçoit l'interruption 26, celui-ci est branché par le contrôleur d'interruption sur le point d'entrée de la séquence d'instructions 21. En exécutant la séquence d'instructions 21, le processeur 4 prend en compte son identificateur pour consulter la ligne de la table 16 qui lui est associée, de façon à s'initialiser. En particulier, le processeur 4 construit dans sa zone mémoire privée 23 au moyen de la séquence 21, des structures de données telles que des piles d'exécution nécessaires à s'établir un contexte d'exécution. La séquence d'instructions se termine par un appel à une procédure de tests, qui dans le contexte d'exécution du processeur 4, est par exemple la séquence 17 de code de test. Le processeur 4 exécute alors sa séquence propre 17. De façon avantageuse, la programmation de la séquence 23 prévoie l'utilisation de la structure de verrous créée en phase 11 de façon à conserver une cohérence de ressources de la machine 1, accédée par les autres processeurs 1, 3, 5, comme c'est le cas avec un système d'exploitation multiprocesseur.

Les explications des phases 14 et 15 qui précèdent pour le processeur 4, restent valables pour tout processeur 3, 5. Ainsi chaque processeur 3, 4, 5, exécute en parallèle sa propre séquence de code de test 17, 18, 19. Plusieurs processeurs peuvent aussi exécuter la même séquence de test 17 si la même adresse A2 a été rangée dans la table 16. En fin d'exécution des séquences de code de test 17, 18, 19, la machine 1 se trouve dans un état maîtrisé donc reproductible, disponible pour une exécution de nouvelles séquences de code en répétant les phases 12 à 15.

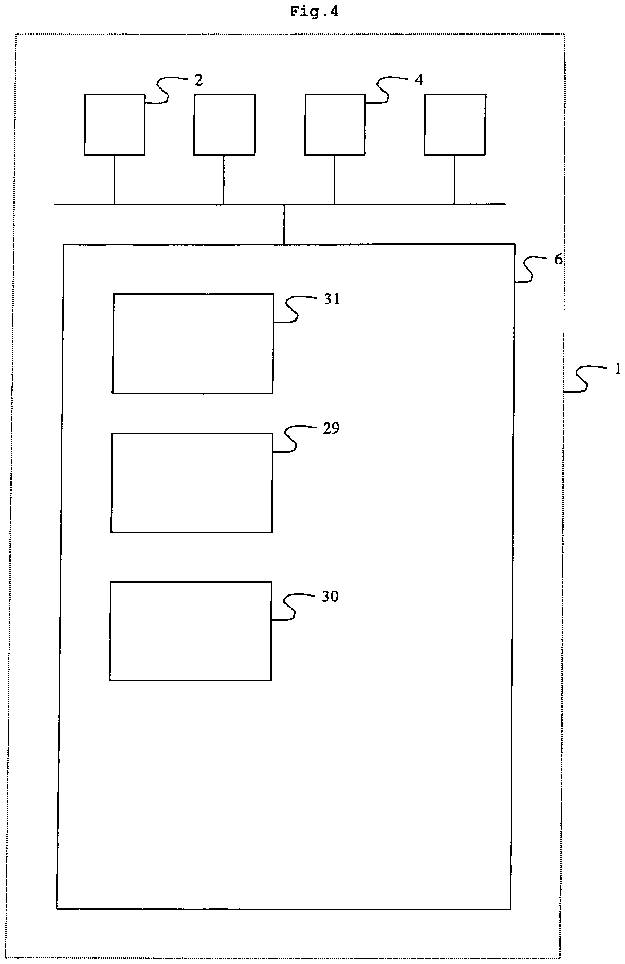

En référence à la figure 4, un moniteur de test conforme à l'invention comprend en mémoire 6 de la machine, un programme 31 destiné à interpréter un langage de script destiné à ceux qui écrivent les tests, un programme 29 qui constitue une partie noyau pour piloter les tests en fonction des scripts, une librairie 30 de fonctions qui constitue une interface de programmation applicative (API pour Application Programming Interface en anglais) avec le micrologiciel de la machine 1.

Lorsqu'un utilisateur veut effectuer une série de tests en environnement multiprocesseur, il lance le moniteur de test qui tourne sous le système d'exploitation simplifié monoprocesseur. Ceci a pour effet d'activer le noyau 29 qui met en oeuvre les phases 10 à 14 au moyen de fonctions contenues dans la librairie 30. Chaque processeur activé par la phase 14, déclenche alors la phase 15 en utilisant les fonctions de la librairie 30.

La librairie 30 contient une fonction pour construire la table 16 en phase 11 qui appelle des fonctions micrologicielles d'identification de processeurs, une fonction pour allouer un contexte d'exécution à un processeur applicatif en phase 12, une fonction pour enregistrer un point de démarrage de processeur applicatif en phase 13, une fonction pour démarrer un processeur applicatif indépendamment des autres en phase 14, des fonctions de verrou.

Les fonctions de verrou ne sont pas les fonctions de verrou standard du système d'exploitation monoprocesseur, lequel ne prévoyant pas que plusieurs instructions peuvent s'exécuter simultanément sur des processeurs différents. Ces fonctions de verrou sont réalisées au moyen d'opérations atomiques connues telles que Test&Set, Load&Reserved. Rappelons qu'une opération atomique est telle qu'aucune autre opération ne peut être réalisée entre le début et la fin de l'opération. Pour plus de détails, on peut se référer par exemple au brevet FR2754925.

## Revendications

1. Procédé de test d'une machine multiprocesseur (1), cette machine comprenant plusieurs processeurs (2, 3, 4, 5) interconnectés à une mémoire (6) comprenant une zone de mémoire commune (20), les processeurs étant aptes à exécuter des séquences d'instructions simultanément, **caractérisé en ce qu'**il comprend les étapes suivantes :
a. le lancement (8) d'un système d'exploitation monoprocesseur sur un premier processeur (2), contrôlant la mémoire (6) ;
b. le lancement (9), sous la commande du premier processeur (2), de l'exécution d'au moins une séquence d'instructions (17, 18, 19) par au moins un autre processeur (3, 4, 5), ledit lancement (9) comprenant :
b1. le chargement (10) à une première adresse (A1) dans la zone mémoire commune (20), d'une première séquence d'instructions (21) exécutable par au moins un autre processeur (3, 4, 5) pour s'initialiser, et à au moins une deuxième adresse (A2) de ladite zone mémoire commune, d'une deuxième séquence d'instructions (17) de code de test exécutable par le ou lesdits autres processeurs (3, 4, 5) après initialisation;
b2. la construction (11) par ledit premier processeur (2) en zone mémoire commune (20) de la machine, d'une table applicative (16) à plusieurs lignes accessibles par chacun des autres processeurs via un identificateur de processeur respectif, le processeur associant à chacune des lignes de la table applicative (16) une zone mémoire privée (22, 23, 24) de la mémoire (6) qui est propre à chacun des autres processeur (3, 4, 5), respectivement, et y range des données nécessaires à l'établissement d'un contexte d'exécution pour chacun desdits autres processeurs (3, 4, 5) et comprenant la deuxième adresse, respectivement ;
b3. l'allocation (12) des zones mémoire privées respectives (22, 23, 24) auxdits autres processeurs (3, 4, 5) ;
b4. la mémorisation (13) de ladite première adresse (A1) dans une table (28) de démarrage de processeur ;
b5. l'envoi (14) d'une interruption (25, 26, 27) à au moins un autre processeur (3, 4, 5) qui provoque un branchement de cet autre processeur à la première adresse (A1) contenue dans la table (28) de démarrage,
de sorte que ledit autre processeur (3, 4, 5) exécute la première séquence d'instructions (21) à la fin de laquelle cet autre processeur se branche sur la deuxième adresse (A2) contenue dans la ligne de la table applicative (16) accessible par l'identificateur dudit autre processeur.

2. Procédé selon la revendication 1, dans lequel la deuxième séquence d'instructions (17, 18, 19) dispose de fonctions de verrouillage/ déverrouillage de ressources de la machine auxquelles un processeur accède.

3. Machine multiprocesseur, comprenant plusieurs processeurs (2, 3, 4, 5) interconnectés à une mémoire (6), et susceptibles d'interagir sous contrôle d'un système d'exploitation multiprocesseur, **caractérisée en ce qu'**elle comprend un moniteur de test, comprenant des fonctions pour la mise en oeuvre du procédé selon l'une quelconque des revendications 1 à 2, avec :
- un stockage de données de test,
- un lanceur (8) d'un système d'exploitation monoprocesseur sur un premier processeur (2), contrôlant la mémoire (6),
- une fonction de pilotage de test, capable, depuis le premier processeur (2) sous un système d'exploitation monoprocesseur, de charger (10), à une première adresse (A1) dans une zone mémoire commune (20) de la mémoire (6), une première séquence d'instructions (21) exécutable par au moins un autre processeur (3, 4, 5) pour s'initialiser et de charger, à au moins une deuxième adresse (A2) de la zone mémoire commune, au moins une deuxième séquence d'instructions (17, 18, 19) de code de test exécutable par le ou les autres processeurs (3, 4, 5) après initialisation, tirées du stockage de données de test ; de construire en zone mémoire commune (20) une table applicative (16) à plusieurs lignes accessibles par chacun des autres processeurs (3, 4, 5) via un identificateur de processeur respectif, en associant à chacune des lignes de la table applicative (16) une zone mémoire privée (22, 23, 24) de la mémoire (6) qui est propre à chacun des autres processeur (3, 4, 5), respectivement, et y ranger des données nécessaires à l'établissement d'un contexte d'exécution pour chacun des autres processeurs (3, 4, 5) comprenant la deuxième adresse, respectivement ; d'allouer les zones mémoire privées respectives (22, 23, 24) aux autres processeurs (3, 4, 5) ; de mémoriser la première adresse (A1) dans une table (28) de démarrage de processeur; d'envoyer(14) une interruption (25, 26, 27) à au moins un autre processeur (3, 4, 5) qui provoque un branchement de cet autre processeur à la première adresse (A1) contenue dans la table (28) de démarrage de sorte que ledit autre processeur (3, 4, 5) exécute la première séquence d'instructions (21) à la fin de laquelle cet autre processeur se branche sur la deuxième adresse (A2) contenue dans la ligne de la table applicative (16) accessible par l'identificateur dudit autre processeur afin de lancer (9) l'exécution d'au moins une deuxième séquence d'instructions (17, 18, 19) par ledit autre processeur (3, 4, 5).

4. Machine multi-processeurs selon la revendication 3, dans laquelle le moniteur de test comprend :
- un programme (31) destiné à interpréter un langage de script destiné à un opérateur écrivant le code de test,
- un programme (29) qui constitue une partie noyau pour piloter des tests en fonction des scripts,
- une librairie (30) de fonctions qui constitue une interface de programmation applicative avec le micrologiciel de la machine (1),
ladite partie noyau (29) étant adaptée pour exécuter les opérations b1 à b5 afin de déclencher l'exécution (15) de la séquence d'instructions (17, 18, 19) par chacun des autres processeurs (3, 4, 5) au moyen des fonctions contenues dans la librairie (30).

## Patentansprüche

1. Testverfahren einer Multiprozessormaschine (1), wobei diese Maschine mehrere Prozessoren (2, 3, 4, 5) umfasst, die mit einem Speicher (6) zusammengeschaltet sind, umfassend einen gemeinsamen Speicherbereich (20), wobei die Prozessoren geeignet sind, Anweisungssequenzen gleichzeitig auszuführen, **dadurch gekennzeichnet, dass** es die folgenden Schritte umfasst:
a. das Starten (8) eines Monoprozessor-Betriebssystems auf einem ersten Prozessor (2), der den Speicher (6) kontrolliert;
b. das Starten (9) der Ausführung wenigstens einer Anweisungssequenz (17, 18, 19) durch wenigstens einen anderen Prozessor (3, 4, 5) unter dem Befehl des ersten Prozessors (2), wobei das genannte Starten (9) umfasst:
b1. das Laden (10) einer ersten Anweisungssequenz (21), die durch wenigstens einen anderen Prozessor (3, 4, 5) ausführbar ist, um sich zu initialisieren, auf eine erste Adresse (A1) in dem gemeinsamen Speicherbereich (20) und auf wenigstens eine zweite Adresse (A2) des genannten gemeinsamen Speicherbereichs, einer zweiten Textcode-Anweisungssequenz (17), die durch den oder die anderen Prozessoren (3, 4, 5) nach der Initialisierung ausführbar ist;
b2.das Aufbauen (11) einer Anwendungstabelle (16) mit mehreren Zeilen, die durch jeden der anderen Prozessoren über eine jeweilige Prozessorkennung zugänglich sind, durch den genannten ersten Prozessor (2) im gemeinsamen Speicherbereich (20) der Maschine, wobei der Prozessor jeder der Zeilen der Anwendungstabelle (16) einen privaten Speicherbereich (22, 23, 24) des Speichers (6) zuordnet, der jeweils jedem der anderen Prozessoren (3, 4, 5) eigen ist, und dort die notwendigen Daten für die Erstellung eines Ausführungskontextes für jeden der genannten anderen Prozessoren (3, 4, 5) einordnet und umfassend die zweite Adresse, bzw.:
b3.das Zuordnen (12) der jeweiligen privaten Speicherbereiche (22, 23, 24) zu den anderen Prozessoren (3, 4, 5);
b4.das Abspeichern (13) der genannten ersten Adresse (A1) in einer Prozessorstarttabelle (28);
b5.den Versand (14) einer Unterbrechung (25, 26, 27) an wenigstens einen anderen Prozessor (3, 4, 5), der einen Anschluss dieses anderen Prozessors an die erste Adresse (A1) hervorruft, die in der Starttabelle (28) enthalten ist,
derart, dass der genannte andere Prozessor (3, 4, 5) die erste Anweisungssequenz (21) ausführt, bei deren Abschluss dieser andere Prozessor sich an die zweite Adresse (A2) anschließt, die in der Zeile der Anwendungstabelle (16) enthalten ist, die durch die Kennung des genannten Prozessors zugänglich ist.

2. Verfahren gemäß Anspruch 1, bei dem die zweite Anwendungssequenz (17, 18, 19) über Ver- / Entriegelungsfunktionen von Ressourcen der Maschine verfügt, auf die ein Prozessor zugreift.

3. Multiprozessormaschine, umfassend mehrere Prozessoren (2, 3, 4, 5), die an einem Speicher (6) zusammengeschaltet und geeignet sind, unter der Kontrolle eines Multiprozessor-Betriebssystems zu interagieren, **dadurch gekennzeichnet, dass** sie einen Testmonitor umfasst, umfassend Funktionen für die Umsetzung des Verfahrens gemäß irgendeinem der Ansprüche 1 bis 2, mit:
- einer Speicherung von Testdaten,
- einem Starter (8) eines Monoprozessor-Betriebssystems auf einem ersten Prozessor (2), der den Speicher (6) kontrolliert,
- einer Teststeuerfunktion, die geeignet ist, ausgehend von dem ersten Prozessor (2) unter einem Monoprozessor-Betriebssystem eine erste Anweisungssequenz (21), die durch wenigstens einen anderen Prozessor (3, 4, 5) ausführbar ist, um sich zu initialisieren, auf eine erste Adresse (A1) in einem gemeinsamen Speicherbereich (20) des Speichers (6) zu laden, und auf wenigstens eine zweite Adresse (A2) des gemeinsamen Speicherbereichs wenigstens eine zweite Anweisungssequenz (17, 18, 19) des Testcodes zu laden, die durch dem oder die anderen Prozessor(en) (3, 4, 5) nach der Initialisierung ausführbar ist, die aus der Speicherung der Testdaten entnommen sind; aufbauen einer Anwendungstabelle (16) mit mehreren Zeilen, die durch jeden der anderen Prozessoren (3, 4, 5) über eine jeweilige Prozessorkennung zugänglich sind, im gemeinsamen Speicherbereich (20), indem jeder Zeile der Anwendungstabelle (16) ein privater Speicherbereich (22, 23, 24) des Speichers (6) zugeordnet ist, der jeweils jedem der anderen Prozessoren (3, 4, 5) eigen ist, und dort notwendige Daten für die Erstellung eines Ausführungskontextes für jeweils jeden der anderen Prozessoren (3, 4, 5) einordnen, umfassend die zweite Adresse, zuordnen der jeweiligen privaten Speicherbereiche (22, 23, 24) zu den anderen Prozessoren (3, 4, 5); speichern der ersten Adresse (A1) in einer Prozessorstarttabelle (28); versenden (14) einer Unterbrechung (25, 26, 27) an wenigstens einen anderen Prozessor (3, 4, 5), der einen Anschluss dieses anderen Prozessors an die erste Adresse (A1) hervorruft, die in der Starttabelle (28) derart enthalten ist, dass der genannte andere Prozessor (3, 4, 5) die erste Anweisungssequenz (21) ausführt, bei deren Abschluss dieser andere Prozessor sich an die zweite Adresse (A2) anschließt, die in der Zeile der Anwendungstabelle (16) enthalten ist, die durch die Kennung des genannten anderen Prozessors zugänglich ist, um die Ausführung wenigstens einer zweiten Anweisungssequenz (17, 18, 19) durch den genannten anderen Prozessor (3, 4, 5) zu starten (9).

4. Multiprozessormaschine gemäß Anspruch 3, bei dem der Testmonitor umfasst:
- ein Programm (31), das zum Interpretieren einer Skriptsprache bestimmt ist, die für einen den Testcode schreibenden Operator bestimmt ist,
- ein Programm (29), das einen Kernteil zum Steuern der Tests in Abhängigkeit von den Skripts darstellt,
- eine Funktionenbibliothek (30), die eine Anwendungs-Programmierschnittstelle mit der Firmware der Maschine (1) darstellt, wobei der genannte Kernteil (29) geeignet ist, um die Operationen b1 bis b5 auszuführen, um die Ausführung (15) der Anweisungssequenz (17, 18, 19) durch jeden der anderen Prozessoren (3, 4, 5) mittels der in der Bibliothek (30) enthaltenen Funktionen auszulösen.

## Claims

1. A method for testing a multiprocessor machine (1), this machine comprising several processors (2, 3, 4, 5) interconnected to a memory (6) comprising a common memory zone (20), the processors being able to execute sequences of instructions simultaneously, **characterised in that** it comprises the following steps of:
a. booting (8) a single-processor operating system on a first processor (2), controlling the memory (6);
b. booting (9), under the command of the first processor (2), the execution of at least one sequence of instructions (17, 18, 19) by at least one other processor (3, 4, 5), said booting (9) comprising:
b1. loading (10) at a first address (A1) in the common memory zone (20), a first sequence of instructions (21) executable by at least one other processor (3, 4, 5) to be initialised, and at least one second address (A2) of said common memory zone, a second sequence of instructions (17) of test code executable by said other processors (3, 4, 5) after initialisation;
b2. building (11) by said first processor (2) in the common memory zone (20) of the machine, an application table (16) with several rows accessible by each of the other processors via a respective processor identifier, the processor associating with each of the rows of the application table (16), a private memory zone (22, 23, 24) of the memory (6) which is specific to each of the other processors (3, 4, 5), respectively, and stores therein data required for establishing an execution context for each of said other processors (3, 4, 5) and comprising the second address, respectively;
b3. allocating (12) respective private memory zones (22, 23, 24) to said other processors (3, 4, 5);
b4. storing (13) said first address (A1) in a processor start table (28);
b5. sending (14) an interrupt (25, 26, 27) to at least one other processor (3, 4, 5) which causes a connection of this other processor to the first address (A1) contained in the start table (28),
such that said other processor (3, 4, 5) executes the first sequence of instructions (21) at the end of which this other processor connects to the second address (A2) contained in the row of the application table (16) accessible by the identifier of said other processor.

2. The method according to claim 1, wherein the second sequence of instructions (17, 18, 19) has functions for locking/unlocking machine resources to which a processor accesses.

3. A multiprocessor machine, comprising several processors (2, 3, 4, 5) interconnected to a memory (6), and likely to interact under the control of a multiprocessor operating system, **characterised in that** it comprises a testing monitor, comprising functions for implementing the method according to any of claims 1 to 2, with:
- a test data storage,
- a booter (8) for the single-processor operating system on a first processor (2), controlling the memory (6),
- a testing driving function, capable of, from the first processor (2) under a single-processor operating system, loading (10), at a first address (A1) in a common memory zone (20) of the memory (6), a first sequence of instructions (21) executable by at least one other processor (3, 4, 5) to be initialised and loading, at at least one second address (A2) of the common memory zone, at least one second sequence of instructions (17, 18, 19) of test code executable by the other processor(s) (3, 4, 5) after initialisation, drawn from the test data storage; building in the common memory zone (20) an application table (16) with several rows accessible by each of the other processors (3, 4, 5) via a respective processor identifier, by associating with each of the rows of the application table (16), a private memory zone (22, 23, 24) of the memory (6) which is specific to each of the other processors (3, 4, 5), respectively, and storing therein data required for establishing an execution context for each of the other processors (3, 4, 5) comprising the second address, respectively; allocating respective private memory zones (22, 23, 24) to the other processors (3, 4, 5); storing the first address (A1) in a processor start table (28); sending (14) an interrupt (25, 26, 27) to at least one other processor (3, 4, 5) which causes a connection of this other processor to the first address (A1) contained in the start table (28) such that said other processor (3, 4, 5) executes the first sequence of instructions (21) at the end of which this other processor connects to the second address (A2) contained in the row of the application table (16) accessible by the identifier of said other processor in order to boot (9) the execution of at least one second sequence of instructions (17, 18, 19) by said other processor (3, 4, 5).

4. A multi-processor machine according to claim 3, wherein the testing monitor comprises:
- a programme (31) for interpreting a script language intended for an operator writing the test code,
- a programme (29) which is a kernel part for driving tests as a function of the scripts,
- a library (30) of functions which is an application programming interface with the firmware of the machine (1),
said kernel part (29) being adapted to execute operations b1 to b5 in order to trigger execution (15) of the sequence of instructions (17, 18, 19) by each of the other processors (3, 4, 5) by means of the functions contained in the library (30).
